# FASCICULE DE BREVET EUROPEEN

(11) **EP 2 220 420 B1**
(45) Date de publication et mention de la délivrance du brevet: **19.03.2014**
(21) Numéro de dépôt: 08871183.3
(22) Date de dépôt: 07.11.2008
(51) Int. Cl.: F16M 11/08, F16M 11/18

(54) **MODULE SUPPORT DE CAMERA ET DISPOSITIF DE PRISE DE VUES EN RELIEF**
KAMERAHALTEMODUL UND VORRICHTUNG ZUM SCHIESSEN VON RELIEFBILDERN
CAMERA HOLDING MODULE AND DEVICE FOR RELIEF SHOOTING

(30) Priorité: 07.11.2007 FR 0707816
(43) Date de publication de la demande: 25.08.2010
(73) Titulaire: Binocle, 94360 Bry-sur-Marne (FR)
(72) Inventeur: PUPULIN, Yves, F-75011 Paris (FR); PERLES, Yves, F-75012 Paris (FR)
(74) Mandataire: Priori, Enrico
(86) Numéro de dépôt international: PCT/FR2008/001584
(87) Numéro de publication internationale: WO 2009/092924

(56) Documents cités:
- FR-A- 1 528 397
- JP-A- 2 260 890
- US-A- 4 418 993
- US-A- 4 734 756
- US-A1- 2006 204 240
- US-B1- 6 701 081

## Description

La photographie en relief existe depuis le milieu du 19^{ème} siècle, et diverses solutions ont été envisagées quant au positionnement relatif de deux appareils photos ou de deux caméras qui peuvent être intégrés dans un caisson unique ou placés sur des supports pour un positionnement côte à côte ou en miroir.

En 1999, la Société Demanderesse a présenté en première mondiale une caméra stéréoscopique numérique à l'IBC (Amsterdam), qui, grâce à un pilotage du mouvement permettait une maîtrise instantanée du relief susceptible d'assurer un direct de télévision.

Cette première caméra stéréoscopique était composée de deux caméras SDI ('Microcam' de Thomson Broadcast Systems), et présentait toutes les motorisations nécessaires pour assurer un relief contrôlé dès la prise de vues à l'aide d'un dispositif de visualisation et de contrôle permettant d'afficher en temps réel l'image en relief mais aussi les différents paramètres de l'image et de la commande de mouvement ('motion control'). Cette caméra a permis de réaliser le premier tournage en multi-caméras avec projection en direct sur grand écran incluant les variations de l'ensemble des paramètres de prise de vues en relief (entraxe, vergence, zoom, point et diaphragme).

Une première mondiale d'une captation d'émission de télévision en relief eu lieu le 1 er juillet 2000 à Clamecy dans la Nièvre (France).

Les paramètres motorisés étaient les suivants : entraxes entres les caméras, vergence des caméras (c'est-à-dire l'angle de convergence entre les deux axes optiques des caméras) sur les deux objectifs à focale variable de marque Angénieux, mises au point, diaphragmes et zooms.

Les paramètres appairés étaient, en dehors des axes mécaniques, tous les paramètres de gestion d'images issus des CCU (Camera Control Unit : unités de calcul des caméras), des deux caméras formant le couple stéréoscopique et les axes optiques.

Les systèmes de prise de vues en relief à N caméras (N étant supérieur ou égal à 2) mettent actuellement en oeuvre un assemblage de composants qui conduisent à une complexité mécanique élevée et à un encombrement important, inconvénients auxquels il faut ajouter un coût élevé.

Le document US 2006/0204240 divulgue un support pour deux caméras pour prise de vues en relief, comportant un chariot mobile en translation dans un plan de translation et présentant un moyen de guidage pour coopérer avec au moins un rail de guidage porté par une première face d'un corps de module, ainsi qu'un dispositif d'entraînement en translation dudit chariot mobile, un premier élément rotatif de support de caméra porté par le chariot mobile et présentant un axe de rotation et un élément de guidage ainsi qu'un actionneur coopérant avec l'élément de guidage pour produire son déplacement de manière à entraîner en rotation l'élément de support de caméra et un deuxième élément rotatif de support de caméra, non entrainé en translation et entrainé en rotation de manière symétrique audit premier élément rotatif de support de caméra.

L'invention propose de remédier à au moins un de ces inconvénients grâce à une conception modulaire qui permet de réaliser des caméras stéréoscopiques à partir d'éléments qui sont communs à toutes les caméras: les modules. Ces modules permettent de réduire les encombrements en intégrant l'ensemble des fonctions mécaniques et électroniques et notamment de systématiser et simplifier la commande des paramètres de prise de vues stéréoscopiques, une fois ceux-ci intégrés dans un dispositif de prise de vues en relief.

L'invention concerne ainsi un module support de caméra pour prise de vues en relief à N caméras, caractérisé en ce qu'il comporte :
- une ossature rigide appelée corps du module qui peut regrouper sur ses différentes faces les éléments mécaniques et/ou électroniques.
- un chariot mobile en translation dans un plan de translation et présentant un moyen de guidage pour coopérer avec au moins un rail de guidage porté par une première face du corps du module, ainsi qu'un dispositif d'entraînement dudit chariot mobile.
- un élément rotatif de support de caméra porté par le chariot mobile et présentant un axe de rotation, et un élément de guidage, ainsi qu'un actionneur coopérant avec l'élément de guidage pour produire son déplacement de manière à entraîner en rotation l'élément de support de caméra, notamment sur un angle de rotation de 10° au maximum, et plus particulièrement de 5° au maximum, le dispositif d'entraînement en translation du chariot mobile étant disposé entre l'actionneur et l'axe de rotation de l'élément rotatif.

Cet arrangement dans lequel la commande en rotation de l'élément rotatif de support de caméra est distincte et éloignée de l'axe de rotation de cet élément permet une architecture compacte qui rend possible la réalisation de modules intégrant toutes les fonctionnalités d'une prise de vues stéréoscopiques. L'élément de guidage coulisse avantageusement dans une fente de guidage ménagée dans le chariot mobile.

Le chariot mobile en translation peut être guidé par deux rails de guidage parallèles, l'élément rotatif de support de caméra s'étendant au moins dans l'espace entre les deux rails de guidage.

Avantageusement, l'axe de rotation de l'élément rotatif de support de caméra est disposé au dessus d'un premier rail.

L'actionneur est de préférence situé à l'extérieur de l'espace entre les deux rails alors que l'élément de guidage est disposé dans une région de l'élément rotatif de support de caméra, au-delà de l'espace entre les deux rails.

Le dispositif d'entraînement en translation du chariot mobile peut être disposé dans l'espace entre les deux rails.

Avantageusement, l'actionneur et/ou le dispositif d'entraînement est une vis à billes ou une vis sans fin.

L'élément rotatif de support de caméra peut intégrer un support à glissière de caméra.

La rotation autour de l'axe peut-être obtenue grâce à un élément élastique permettant dans une direction un dit déplacement d'entraînement en rotation et ayant une raideur élevée dans les autres directions

L'angle de rotation maximal de l'élément rotatif peut être au plus égal à 10° et plus particulièrement à 5°.

Le module présente un dispositif de correction d'assiette à notamment trois points qui est intégré dans le corps du module, et qui comporte trois organes de commandes logés dans des rainures ménagées dans une deuxième face du corps de module opposée à la première face, ainsi que trois éléments mobiles perpendiculairement au plan de translation du module.

L'invention concerne également un dispositif de prise de vues en relief, caractérisé en ce qu'il comporte au moins un module tel que défini ci-dessus et un dispositif de commande apte à générer des paramètres de pilotage du chariot mobile et de l'élément rotatif de support de caméra du ou des modules, ainsi qu'au moins de la mise au point de la ou des caméras portées par le ou les modules. Le dispositif peut présenter au moins deux modules tels que définis ci-dessus. Il peut présenter au moins un module de rotation présentant seulement un dit élément rotatif, donc sans chariot mobile de translation.

Le dispositif de commande peut alors présenter :
- un premier mode opératoire dit de niveau 1 dans lequel lesdits paramètres sont ajustés indépendamment les uns des autres,
- un deuxième mode opératoire dit de niveau 2 dans lequel au moins un paramètre est asservi à un autre paramètre, les deux paramètres étant par exemple l'angle de vergence et la distance de mise au point.

Le dispositif de commande peut présenter un troisième mode opératoire dit de niveau 3 dans lequel un premier paramètre est asservi à un deuxième paramètre, lequel est asservi à au moins un troisième paramètre. Par exemple, le premier paramètre est l'entraxe entre deux caméras de deux modules, le deuxième paramètre est l'angle de vergence entre lesdites deux caméras, et le troisième paramètre est la distance de mise au point.

Avantageusement, les modules sont montés sur une équerre, au moins deux modules étant disposés de part et d'autre d'un miroir de renvoi semi réfléchissant.

Au moins une paire de modules symétriques peut être montée tête-bêche dans un même boîtier. Le dispositif peut alors présenter deux dits boîtiers montés en équerre de part et d'autre d'un miroir semi réfléchissant, avec imbrication des axes des caméras portées par les modules montés dans les boîtiers respectifs.

L'invention concerne également un ensemble de modules tels que définis ci-dessus, caractérisé en ce qu'il comporte des modules de différentes tailles pour des caméras de différents types, et en ce que les paramètres de commande des modules sont indépendants du module, de sorte que les signaux de commande d'un dispositif de commande soient utilisables pour tous les modules de l'ensemble de modules.

D'autres caractéristiques et avantages de l'invention apparaîtront mieux à la lecture de la description qui va suivre, donnée à titre d'exemple non limitatif, en liaison avec les dessins dans lesquels :
- les figures 1 a à 1c représentent un mode de réalisation préféré d'un module D2 selon l'invention, respectivement en perspective de dessus (1a) et de dessous (1b) et en vue de dessus (1c) ;
- les figures 2a et 2b illustrent deux modes de réalisation d'un dispositif stéréoscopique à deux caméras placées côte à côte (2a) ou en équerre (2b) et utilisant deux modules D2 et G2 selon l'invention ;
- la figure 3 illustre un dispositif stéréoscopique à deux caméras utilisant deux modules D1 et G2 placés côte à côte ;
- les figures 4 et 5 représentent deux exemples de dispositifs stéréoscopiques à deux caméras (figure 4) et à huit caméras (figure 5) équipés de modules selon l'invention avec un montage en équerre dit zénithal ;
- la figure 6 illustre un montage en équerre dite équerre « grue » pour deux modules D2 et G1 ;
- la figure 7 illustre un couplage tête-bêche des modules droite et gauche, notamment pour un montage en équerre ;
- la figure 8 illustre un module complexe intégrant sur un même support 11 deux modules élémentaires, dont l'un présente une fonction de translation et de rotation et dont l'autre présente seulement une fonction de rotation ;
- et la figure 9 illustre un moyen de commande de rotation d'un élément de support rotatif de caméra ;
- la figure 10 illustre une variante de l'invention avec un rail unique et la figure 11 un mode préféré de montage d'un dispositif de prise de vues.

L'invention concerne la réalisation et la gestion de caméras de prise de vues en relief à N points de vues (avec N supérieur ou égal à 2) gérées par commande de mouvement ('motion control'), fonctionnant notamment par apprentissage.

Ces caméras sont supportées par des modules pouvant avoir différentes tailles et des fonctionnalités identiques positionnés sur des supports dit « côte à côte » ou « en équerre » pour toutes les configurations de prises de vues.

Ces modules et supports sont versatiles, d'usage identique et peuvent avantageusement utiliser le même langage de commandes quelque soient la masse, le volume et l'importance des variations utilisable par chacun des systèmes de prises de vues à 2 points de vues ou plus (N supérieur à 2).

L'invention concerne plus particulièrement la réalisation de modules de support de caméras adaptables à tous dispositifs de prises de vues en relief à 2 ou N points de vues quelque soient le standard image, le volume ou la masse de chacune des caméras composant les 2 ou N points de vues.

Ces modules sont adaptés à des caméras de définitions, de volumes et de masses différentes et peuvent être compatibles entre eux.

Exemple : caméras SD, HD, 2K et 4K de 0 à 5 kg, de 5 à 10 kg et de 10 à 15 kg....

Ces modules sont identiques et adaptables quelque soit le dispositif dans lequel ils s'intègrent à 2 ou N caméras et sont symétrisés. Les modules droits ou gauches pour grue, caméra d'épaule, 'Steadycam' plongée etc. sont avantageusement réversibles et comportent les mêmes éléments mécaniques et électroniques mais surtout les mêmes échelles de gestion et de relevé de positionnement enregistré par la commande de mouvement ('motion control').

Ces modules sont indépendants les uns des autres mais peuvent abriter des fonctionnalités complémentaires :
Exemple : un seul générateur 3 niveaux suffit pour l'ensemble du dispositif à 2 ou N caméras. Il synchronise alors les caméras par le biais du 'motion control'.
c) Ces modules peuvent intégrer un grand nombre d'éléments, au moins un étant choisi parmi la liste suivante :
○ la totalité des fonctionnalités mécaniques, électroniques, informatiques (un mini PC peut-être inclus au support des modules au module maître ou au côté du 'motion control' en version transportable) liées à la vergence, l'entraxe et les corrections d'altitudes, de roll et de tilt permettant la confusion des axes optiques.
○ Les électroniques des zooms, de la mise au point et des diaphragmes.
○ les moto réducteurs codeurs des paramètres de vergence, d'entraxe et de correction d'altitude.
○ les détecteurs de fin de courses.
○ les cartes de distribution et d'intercommunication, de fond de panier...
○ les cartes de gestion et de puissance des actionneurs,
○ les générateurs de signaux de synchronisation à 1, 2 ou 3 niveaux.
○ les éléments de mesures et de relevés des positions temporelles : Time Code, horloge temps universel et spatiales : de type boussole, GPS, altimètre, inclinomètre, télémètre laser, etc.
○ les systèmes de commande et d'émission par câble ou radio ('Wi-fi', 'bluetooth').
○ le système informatique d'enregistrement des données (mémoire flash, disque dur, clé USB...)
○ un microphone de captation pour le 'clap' ou le 1000 Hz d'un 'clap' électronique enregistré avec les données des commandes de mouvement.
○ un récepteur HF d'un TC émis par un générateur de TC
○ un calculateur pour les commandes et le recueil de l'ensemble des données.
○ la connectivité permettant la permutation et le transfert de tous signaux électriques et de commandes afin d'être opérables, commutables et reliés entre eux par exemple par réseau (ex : RS 485, USB, Eternet) quelque soit le mode d'assemblage et quelque soit l'opérateur qui intervient : le stéréographe, le cadreur ou l'assistant caméra peuvent intervenir sur les différentes commandes afin de simplifier la répartition des tâches. Ces tâches sont complémentaires, hiérarchisées et commutables.

Les modules sont interchangeables et en cas de panne, on peut échanger les modules en conservant l'historique, stocké sur le micro contrôleur ou mémoire flash, des données (relevés de position) des réglages précédents.

Les modules sont versatiles : tous les modules droits s'interfacent avec tous les modules gauches :
1. D2 : module de translation et rotation droit
2. G2 : module de translation et rotation gauche symétrique du module D2
3. D1 et G1 : modules de rotation respectivement droit et gauche.

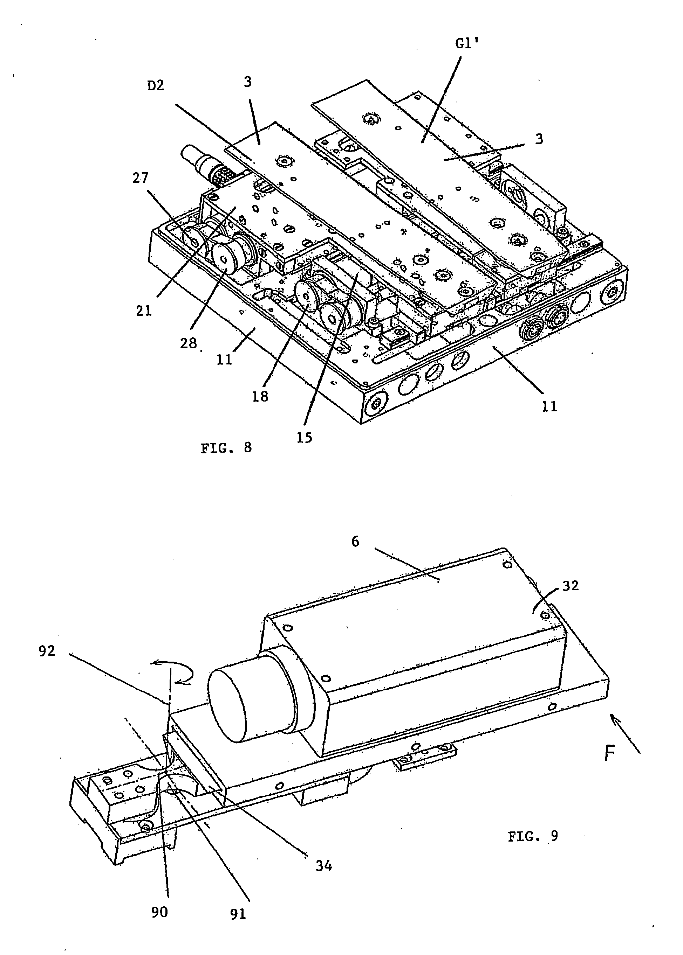

D1' et G1' module de rotation droit ou gauche allégé (compatible avec D2/ G2) (c'est-à-dire sans commande de correction d'assiette, sauf par réglage manuel) pour plongée, hélicoptère. La particularité de ces modules est de se placer directement dans un module D2/G2 afin de fournir au sein même du module, une deuxième rotation propre à réduire considérablement le volume de l'ensemble (voir la figure 8).

Tous ces modules sont les éléments constitutifs de caméras à N points de vues.

Les modules sont réalisés selon un facteur d'échelle mais délivrent avantageusement des valeurs identiques et compatibles de relevés afin d'utiliser un système de transfert et d'affichage commun et compatible à toutes les combinaisons.

Les modules sont organisés de la manière suivante :
A) Intégration de la rotation et de la translation dans un seul boîtier mécanique.
   Les modules intégrant la rotation et la translation sont uniques, ce qui permet un gain de place considérable. Ils sont symétriques afin que les mêmes pièces constituent indépendamment un module gauche ou droit.
B) Ces boîtiers contiennent tous les éléments mécaniques, électroniques et logiciels si le mini PC est intégré, de gestion de la commande de mouvement et de la stéréoscopie.
C) La rotation est assurée par un système sur 360° de type pallier à billes, aiguilles ou rouleaux. Mais, pour les prises de vue en relief, sa rotation est limitée à un angle faible, plus particulièrement inférieur à 10° et plus particulièrement inférieur à 5° par module.
   Ces dispositifs pouvant également être utilisés pour des tournages panoramiques multi caméras sur 360°, les caméras complémentaires quelque soit leur nombre peuvent, dans ce cas, tourner par elles-mêmes sur des angles allant jusqu'à 90° ou plus pour ajuster les bords de champ.
D) Une rotation limitée peut être assurée par un système sans éléments tournants afin d'éviter les problèmes de jeux, (tangage et manque de raideur) si l'on veut minimiser le manque de précision et ceci tout particulièrement lors d'une prise relief en miroir.
   Cette rotation peut-être assurée par un accouplement souple présentant une seule possibilité de mouvement dans un axe 92 et une raideur importante dans l'autre afin d'interdire les variations angulaires verticales ou de torsion. La figure 9 montre un mode de réalisation sous la forme d'une lame métallique 90, par exemple en acier trempé, présentant une région de striction 91, ici profilée en arc de cercle. La rotation est commandée par l'élément 32 dans le sens de la flèche F. La rotation est produite par l'élasticité du métal, donc de manière linéaire et sans jeu. L'épaisseur de la lame qui est de beaucoup supérieure à la largeur de la région de striction 91 assure une raideur élevée dans les directions autres que la direction de la flèche F utile à la vergence des caméras.
   Cette rotation d'amplitude, 5 ou 10° pour la prise de vues en relief à N points de vues, est produite par un mouvement linéaire (vis à bille) ou en rotation (vis sans fin) de sorte qu'il y ait homogénéité entre des systèmes soutenant des caméras de taille et de masses différentes.
E) Dans le cas d'un entraînement par vis à bille de grande précision on limite les jeux de rotation produits lorsque la caméra, oscillant autour de l'axe optique, présente des possibilités de jeu ou d'écrasement en fonction des variations de pression dues par exemple à la pesanteur ou à des vibrations lors de tournages en voiture travelling, hélicoptère ou tout engin vibrant ainsi que dans le cas de 'rolling' (mouvement de rotation autour de l'axe optique) qui entraîne une variation importante de l'effet de gravité sur les accouplements mécaniques.
   Quelque soit la taille des modules réalisant les translations et rotations, l'échelle de codage des mouvements de la commande de mouvement est avantageusement homothétique entre des engins supports de caméras de tailles et masses différentes.
F) De plus, quelle que soient ces variations de tailles et de masses, la valeur de rotation angulaire est avantageusement liée à un nombre identique de pas naturels sans intervention autre que de choisir un angle de rotation.

Toutes les caméras sont donc liées par un code de commande de mouvement qui peut être unique quels que soient leurs volumes et leurs masses, c'est à dire que le système logique et les échelles mécaniques permettant d'actionner la rotation ou la translation d'une caméra de 200 grammes et de 10 kg sont rigoureusement compatibles au sens ou la même commande produit le même effet.

Ceci s'obtient par l'appariement de l'ensemble des moto-réducteurs et intermédiaires mécaniques conservant les mêmes coefficients quelque soient les couples et les puissances nécessaires pour l'ensembles des moto-réducteurs de tous les dispositifs.

Que ces ensembles ont les mêmes coefficients de réductions à tous les niveaux quelques soient la localisation des commandes et leurs ergonomies permettant d'exercer une rotation ou une translation, si bien que X pas codeur correspondent à la même translation ou à la même rotation.

Un tel dispositif est à même d'assurer la compatibilité des différents processus de fabrication de la chaîne stéréoscopique, virtuelle ou réelle, depuis le scénario, puis le tournage et la post-production jusqu'à la diffusion, quelque soient les outils réels et virtuels utilisés compatibles avec ce système de transfert de données.

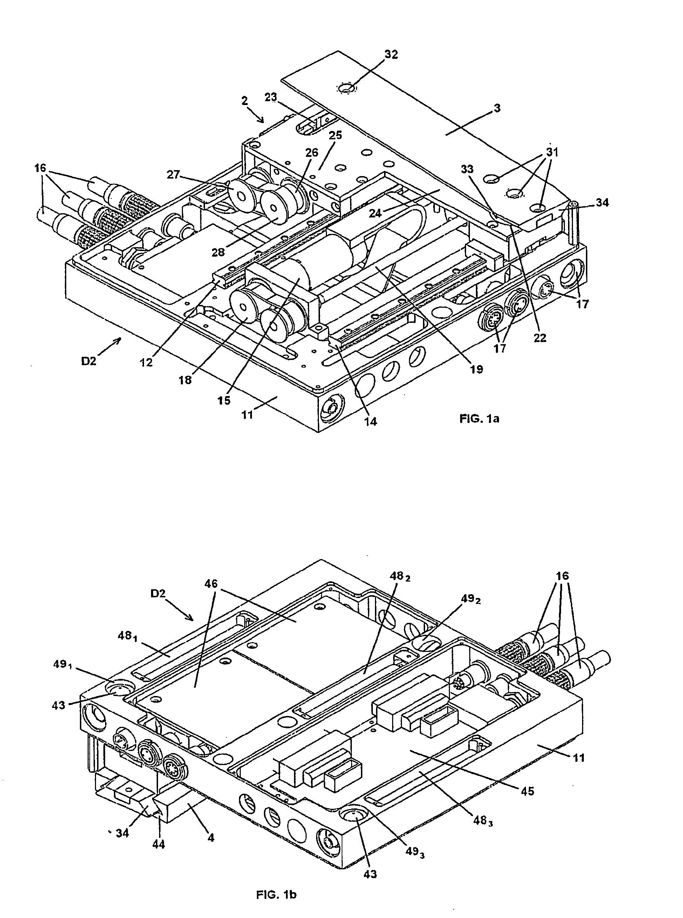

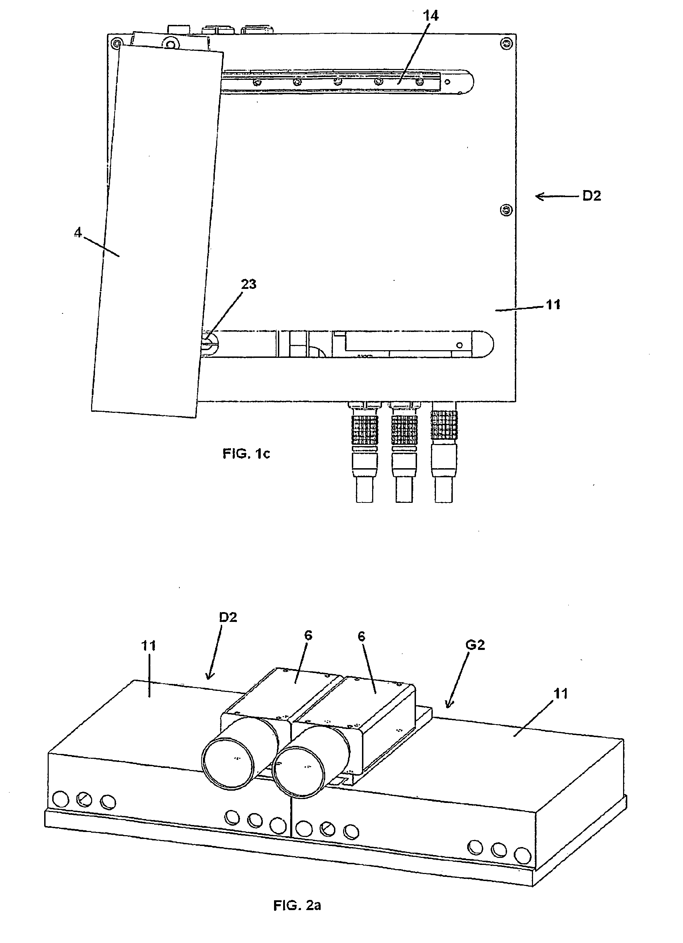

Les figures 1a à 1c illustrent un exemple de module D2 comportant une platine principale ou corps 11 dont la face supérieure est équipée de glissières 12 et 14 qui guident en translation un chariot 2 sur lequel est monté un support de caméra 3. Entre les rails 12 et 14 est disposé un dispositif qui commande la translation du chariot 2. Un moteur pas à pas 15 à courant continu ou sans balai ('brushless') entraîne par l'intermédiaire d'une transmission 18 une vis à bille 19 ou une vis sans fin. Le chariot 2 peut ainsi se déplacer sur toute la largeur de la platine 1 pour régler l'écart entre les caméras et donc la base stéréoscopique entre deux caméras dont les images produisent un couple stéréoscopique. Le module le plus large représenté et référencé D2 (ou G2) correspond au cas d'un système à 2 caméras qui demande nominalement une base stéréoscopique variable la plus large donc la possibilité de faire varier les deux translations simultanément. Pour des systèmes à N points de vues (N supérieur à 2), des modules plus étroits peuvent être utilisés. Ces modules nommés D1 ou G1 ne comportent que la rotation avec le même mécanisme que pour les modules D2 et G2 et pas de translation (variation de l'entraxe entre les axes optiques des caméras) qui dans ce cas précis sera avantageusement placé au niveau des supports des différents modules.

Le module D2 ou G2 présente également sur le corps 11 des connecteurs 16,17 pour des cartes électroniques qui peuvent être logées dans les cavités (ici au nombre de 2) du corps 11 (figure 1b).

Le chariot 2 présente au voisinage de la face avant du module une ouverture 22 pour recevoir l'axe de rotation 33 du support de caméra 3 qui est situé au voisinage d'une de ses extrémités, et plus particulièrement dans l'exemple représenté au dessus du rail 14. A son autre extrémité, le support de caméra 3 présente un doigt 32 coulissant dans une rainure 23 pour guider la rotation du support 3. Cette rotation permet de régler l'angle de vergence. Le déplacement du doigt 32 sur une trajectoire de grande courbure est commandé par un mouvement de translation produit par une vis à billes ou une vis sans fin 27 commandée par un moteur pas à pas et relayé par une transmission 28. Le dispositif moteur, transmission et vis 27, 28 est logé à la partie inférieure d'un prolongement 25 du chariot 2 situé à l'extérieur de l'intervalle entre les rails 12 et 14, dans lequel est logé le mécanisme 15,18,19 de translation du chariot 2.

Cette topographie permet d'obtenir une grande précision dans les mouvements de translation du chariot 2 (qui définit la base stéréoscopique) et de rotation du support 3 (qui définit la vergence) tout en assurant une grande compacité.

L'interpénétration des ensembles de translation et rotation permet un gain de place considérable par rapport aux montages rencontrés dans les systèmes de prise de vues stéréoscopiques professionnels actuellement connus qui ne font que superposer des systèmes existants de translation et rotations conçus pour des déplacements sur 360° mais au contraire de répartir les fonctions de part et d'autre des rails de translation 12 et 14 permet un gain de place appréciable tout en augmentant considérablement la précision de la rotation. En particulier, le rayon de rotation du support 3 est beaucoup plus important dans cette topographie tout en assurant un encombrement faible.

Les cartes de 'fond de panier' logées dans la cavité 45 et qui alimentent à la fois les cartes 46 de gestion de la translation et de la rotation et les cartes de synchronisation des caméras permettent également un gain de place en s'intégrant entre les rainures 48₁ à 48₃ réservées aux corrections d'assiettes et d'alignements optiques.

L'ensemble de ces cartes peut donc être contenu dans un seul boîtier formant un module de commande, ce qui permet ainsi de gérer tous les paramètres sans addition d'éléments encombrants.

Les cartes de gestion '3 niveaux', le mini PC ou toutes autres cartes peuvent indifféremment être situées dans l'un ou l'autre des modules du système de prise de vues à N points de vues (N supérieur ou égal à 2).

Il est notable que les modules de types D1 ou G1 n'intégrant que la rotation peuvent à condition d'être montés dans des platines 11 pour modules D2 et G2 bénéficier d'un espace de stockage important disponible pour tous les systèmes de gestion, GPS etc. décrits précédemment

Les ensembles mécaniques d'alignement optique des caméras intégrant capteur et support d'optiques sont cohérents pour la 2 D mais non pour la prise de vues en relief (3 D). Il s'agit alors de corriger à l'aide d'un système en trois points, l'assiette et l'angle formé à leurs intersections par les angles de prise de vues afin de réduire au maximum les disparités verticales et d'assiette des caméras.

Cet aspect est important pour aligner, dans le cas de la prise de vues stéréoscopique à deux mais aussi à N points de vues, les axes optiques des différentes caméras.

Les ascenseurs qui règlent l'altitude de chacune des portées du tripode perpendiculairement au plan de translation des modules fonctionnent de la façon suivante. Dans les trois rainures 48₁ à 48₃ situées au centre et sur les côtés du corps des modules, sont installés des moto-réducteurs codeurs (non représentés) dont l'axe est une vis qui actionne une pièce conique. Cette pièce sert de renvoi de mouvement et joue sur un élément mobile par exemple à tête hémisphérique 43 formant un ascenseur captif qui coulisse dans une portée respective 49₁ à 49₃ et élève le module en un point. Ces trois éléments mobiles prennent appui sur trois points des supports de module qui servent au montage côte à côte ou en équerre, une fixation élastique assurant une force de rappel leur permettant d'exercer leur fonction d'ascenseur.

Le réglage en trois points avec par exemple une amplitude de réglage de quelques millimètres (typiquement 3 mm) permet dans un temps très bref de régler tous les problèmes d'alignement optique ou d'assiette, et s'agissant d'une commande de mouvement, reproduire cette correction pour la dérive d'un zoom par exemple.

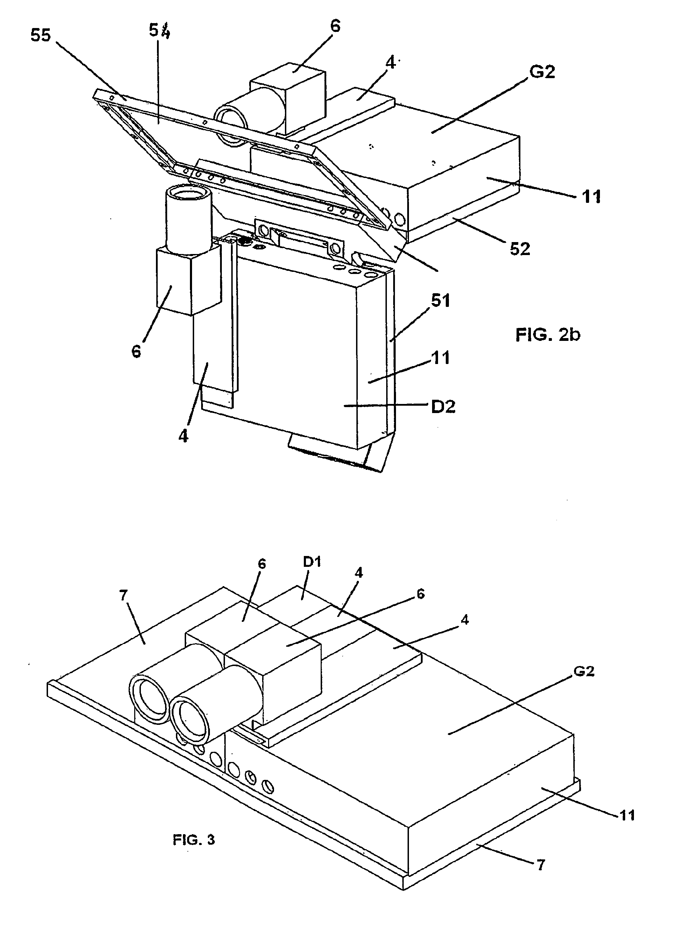

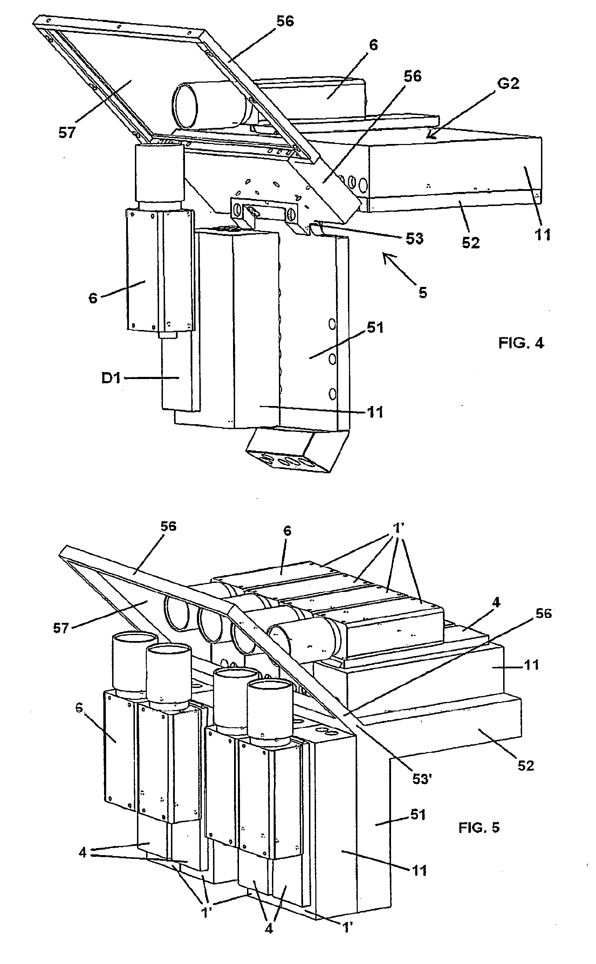

Les modules D1, D2, G1 et G2, peuvent recevoir et distribuer les courants d'alimentation de gestion et d'images. Pour les caméras, les connections et leurs câbles sont intégrables aux supports des modules qu'ils soient en équerre (Figures 4 et 5) ou côte à côte (Figures 2a et 3).
1) Mode de distribution de courants permettant la versatilité des modules sans affectation de l'organisation des ordres entre les différents modules.
   La gestion étant transmise par un bus RS485 ou autre type de bus de données, les modules sont versatiles en position, mais aussi en relation. Leur position dans la hiérarchie des opérations reste décidable à tout moment. C'est cette particularité des modules qui permet l'organisation des hiérarchies de fonctions et d'ordres à la demande.
2) Gestion générale de la commande de mouvement ('motion control' notamment par apprentissage) commandant N modules de N caméras.

La commande de mouvement peut-être gérée par des appareillages de commandes qui peuvent être commandés à proximité de la caméra par l'opérateur, à proximité ou à distance par l'assistant caméra relié au dispositif caméra part câble, 'Blutooth', 'Wifi' ou autre système radio et par le stéréographe, le chef opérateur ou le réalisateur depuis le poste de travail et de contrôle du relief à N caméras.

L'addition d'ordres et la hiérarchie de ces ordres, impliquant d'une part une priorité et d'autre part l'asservissement de l'ensemble des fonctionnalités de commande de mouvement les unes par rapport aux autres sont distribués à discrétion selon que l'opérateur soit seul à opérer ou qu'il ait un ou plusieurs assistants ou qu'il partage les décisions de mises en scène technique avec un stéréographe, un réalisateur ou le chef opérateur du film.

La hiérarchie n'est pas liée seulement à la fonctionnalité mais bien aux différentes commandes qui s'organisent suivant des choix indépendants des différentes commandes. Dans cette perspective, la conception modulaire décrite permet une grande souplesse tant du point de vue du matériel que de la gestion des commandes.

Il s'agit de considérer la prise de vues dans une volonté de caractériser la mise en scène et de maîtriser les paramètres du relief permettant un confort de visualisation pour le spectateur.

Par exemple :

On peut décider que la mise au point asservit la vergence (c'est-à-dire l'angle de vergence) ou qu'à l'inverse, la vergence asservit la mise au point comme dans l'observation humaine.

Si un angle de vergence a été déterminé par le réalisateur comme étant limité à une valeur angulaire maximale, alors, la vergence ne variera plus une fois cette valeur atteinte. On peut par contre, considérer que lorsque cet angle est atteint, il est maintenu à l'aide d'une variation de l'entraxe par algorithme afin de conserver l'angle déterminé.

Nous appelons hiérarchie, l'organisation des différentes fonctions les unes par rapport aux autres :

Quand les commandes sont toutes indépendantes les unes des autres, nous dirons que nous avons une hiérarchie de niveau 1 : un ou des opérateurs ajustent les différents paramètres de la commande de mouvement ou de la caméra indépendamment les uns des autres.

Quand un paramètre est asservi à un autre il est dit d'ordre 2 (par exemple, la mise au point à la vergence ou la vergence à la mise au point).

Quand un axe est asservi à un autre, lui même lié à une première commande : il est dit d'ordre 3. C'est le cas de l'entraxe assujetti à l'angle de vergence constant qui doit lui même suivre la mise au point sans variation de l'angle de vergence. L'effet obtenu est de maintenir dans le plan de l'écran le sujet sans jaillissement ou retrait dans la profondeur du cadre.

Différents systèmes hiérarchiques peuvent coexister à condition que les relevés de positions image/image en tiennent compte.

Le fractionnement des commandes peut s'effectuer en différentes hiérarchies. Par exemple l'entraxe est assujetti à la vergence qui l'est à la mise au point et la vitesse caméra est assujettie aux variations du diaphragme afin d'obtenir une exposition constante liée à un effet de variation de vitesse dans la prise de vue en relief à N points de vues dont les images forment deux à deux des couples stéréoscopiques. Les caméras film possèdent déjà ces fonctions et sont donc autonomes pour ces fonctions en 2D, mais il faut conserver les données et les transmettre ensuite aux différentes étapes de la fabrication des films. Les données étant liés à chaque image, une variation de vitesse lors de la prise de vue doit figurer dans le relevé des données.

Un axe d'un système de prise de vues peut également asservir les axes de différentes caméras dans un système à N points de vues, mais également N systèmes à N points de vues.

Si on considère la prise de vues à N points de vues, la mise au point de la caméra maître peut commander l'ensemble des mises au points, mais elle peut également assujettir l'ensemble des vergences qui doivent alors coïncider.

Huit caméras côte à côte ou en miroir (Figure 5) convergent au même plan de mise au point avec des valeurs angulaires différentes supérieures à l'angle des deux caméras placées au centre. Elles seront donc asservies deux à deux mais devront coïncider au même point que l'ensemble du couple maître et des autres couples.

Dans le cas d'un nombre impair de caméra, 9 par exemple, celle placée au centre du dispositif commandera l'ensemble des couples répartis à sa gauche et à sa droite. La vergence de l'ensemble des caméras se fera sur un point de son axe optique, lui même normal à l'ensemble du dispositif.

Plusieurs dispositifs pourront également être assujettis à l'un d'entre eux.

La hiérarchie peut dépendre des paramètres liés à des valeurs de stéréoscopie, par exemple une disparité en nombre de pixels ou en millimètres sur un écran particulier, en fonction de la taille de l'écran de destination peuvent également être inclus dans la hiérarchie. Dans ce cas l'opérateur pourra être prévenu d'un dépassement, des disparités envisagées, par tout système visuel ou sonore intégrable au dispositif de contrôle et de communication des différents techniciens.
3) La commande de mouvement peut non seulement gérer les paramètres des axes optiques en temps réel, mais peut 'rejouer' les variations de ces axes dans une prise de vues différée. La capacité de rejouer certains paramètres d'une scène y intégrant de nouveaux paramètres ou en changeant les valeurs de certains d'entre eux aux divers degrés de hiérarchie permet la maîtrise de prises de vues très complexes pour lesquelles on apprend chaque axe ou chaque groupe d'axes après l'autre, de maîtriser la prise de vues de plans composites mais également de tourner des plans ou séquences différents en conservant les mêmes paramètres tout au long d'une séquence ou du film.
4) Si on tourne un plan composite, il faut conserver certains paramètres enregistrés lors des autres prises de vues tout en gardant la possibilité d'intervenir sur certains des paramètres de la commande de mouvement.
   - Si par exemple on filme un comédien sur un fond d'incrustation, il est possible de reproduire automatiquement les variations des paramètres utilisées lors de la première prise de vues sur le même comédien. Mais la mise au point, ou tout autre paramètre, peut par décision de la mise en scène être traité différemment.
   - Autre exemple : des personnages de fantômes différents peuvent apparaître tout au long d'un film mais les paramètres de la première prise de vues ou des prises de vues antérieures seront répercutés au cours du tournage.
5) les modules peuvent intégrer une queue d'aronde 34 qui sert de support à une glissière 4 de caméra pourvue d'un profil complémentaire 44. Cette glissière 4 sur laquelle est montée la caméra 6 permet suivant le dispositif optique de situer le point nodal objet dans l'axe de rotation pour des tournages en maquettes ou de venir placer la face avant de l'objectif contre le miroir 57 (dans le cas d'un montage tel qu'aux figures 4 et 5 par exemple) afin de limiter le champ de couverture nécessaire au miroir 57.

Les tailles des queues d'aronde 34, 44 sont dépendantes des caméras 6 qu'elles supportent. On se rapprochera des modèles des fabricants en tentant de limiter l'encombrement au maximum en raison de la tendance actuelle d'allègement des caméras numériques.

### II) Les supports de modules.

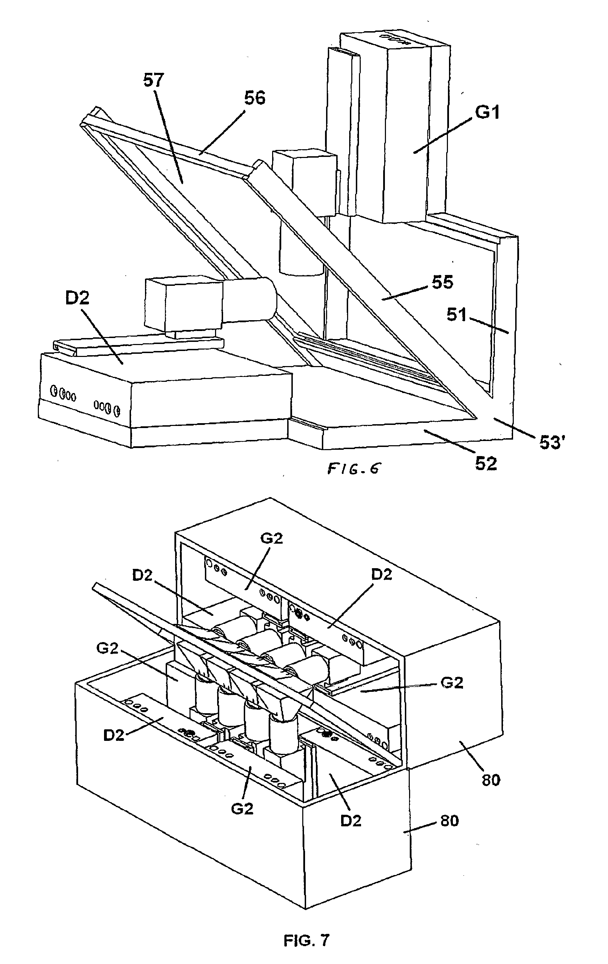

a. Les supports, comme les modules sont versatiles et compatibles. Ils sont d'échelles différentes mais gardent les mêmes fonctionnalités quelques soient les modules qu'ils reçoivent.
b. Versatilité des supports :
   Les modules peuvent servir indépendamment en équerre (Figures 2b, et 4 à 6) ou côte à côte (Figures 2a et 3).
   Les équerres sont de différents types.
   - Nous dirons qu'une équerre fig. 4, 5 est « zénithale » quand son miroir 57 est sur le plan bissecteur de l'équerre du côté de l'angle de 270° et que les deux faces inférieures des caméras sont en vis à vis suivant un angle de 90 ° voir les figures 2b, 4 et 5). Sur ces figures, les modules des caméras sont fixées sur les supports 51 et 52 qui composent l'équerre et le miroir 57 est porté par un cadre 55 et 56 articulé en 53 - Figure 4 - avec les supports 51 et 52 (ou bien relié de manière fixe en 53' -Figure 5 - à ces supports). Cette configuration permet de protéger au mieux les deux surfaces du miroir 57 des lumières parasites qui viennent généralement du dessus, que l'on soit en prise de vues extérieures ou en studio. La figure 2b montre une configuration de prise de vues portée sur l'épaule gauche avec un module D2 et un module G2. A la figure 4, le module D2 est remplacé par un module D1, c'est-à-dire sans translation possible. En effet, pour une prise de vue stéréoscopique à l'aide d'un dispositif porté sur l'épaule, un entraxe réglable sur un seul module est en général suffisant pour définir la base stéréoscopique.
   - Nous dirons qu'une équerre est en configuration « de grue » quand le miroir est situé dans le plan bissecteur de l'angle de 90°. Cette configuration (Figure 6, avec des modules D2 ou G1, comme représenté (ou bien D2 et G2) est moins favorable pour le soleil mais elle permet de placer l'ensemble dans un plan horizontal très près du sol, ce qui est favorable aux prises de vues en contre plongée dans un décor réel.
   - Nous dirons qu'une équerre est mixte quand l'inversion des images haut/bas permet d'utiliser le même dispositif pour les deux applications.
   - Les supports côte à côte 7 (Figures 2a et 3) permettent la juxtaposition de N modules D2/G2 et/ou D1/G1, mais peuvent intégrer des écarteurs (non représentés) pour placer les N supports éloignés les uns des autres pour des prises de vues très distantes par exemple.
c. Fonctionnalités des supports 7, 51, 52.
   - Les supports 7, 51, 52 se placent directement sur toutes les machineries dédiées au cinéma ou à la télévision de sorte qu'elles se substituent aux supports habituels tels que queues d'arondes des constructeurs qui viennent faire l'interface entre les caméras et les têtes motorisées ou manuelles sur lesquelles les caméras prennent place. La raison en est l'ergonomie des systèmes existants qui ne permettent pas la réception des points d'appuis du tripode de réglage des assiettes et des axes optiques qui, intégrés aux modules permettent les réglages des altitudes correctives des axes optiques

   Les systèmes habituels ne permettent pas ce type d'application car ils ne sont pas prévus pour recevoir ce système de corrections qui demande une planéité et un état de surface de qualité élevée des 3 régions où viennent prendre appui les trépieds supports des modules.

   Les supports font donc partie de l'ensemble caméra/module/support car ils assurent l'interface entre la partie supérieure de la tête manuelle (manivelle ou fluide) ou motorisée et les modules. Ils ne peuvent être intégrés aux modules autrement que par une fixation dont la souplesse permet aux tripodes de corriger les assiettes et altitudes des axes optiques.
   - Les supports permettent également la distribution des signaux entre les modules et vers les sources d'alimentation, d'enregistrement ou de gestion externe.
   - Les supports permettent d'inclure un micro contrôleur pour la gestion de l'ensemble des paramètres de la commande de mouvements et de l'enregistrement de séquences courtes.
   - Ce micro contrôleur peut prendre place dans un module ou être intégré sous le miroir dans les positions en équerre et sous les optiques dans les versions côte à côte. Sa fixation restera alors identique.
   - Les supports 7, 51, 52 peuvent également intégrer dans leur épaisseur des cartes de gestion pour certains axes ou fonctionnalités afin de diminuer le volume des modules ou pour la miniaturisation de l'ensemble du système.
d. Connectique :
   - L'ensemble des connecteurs est compatible entre modules et supports.
   - L'interconnexion peut donc se faire entre les modules seuls, les supports seuls et être croisée entre supports et modules.
   - L'interconnexion entre les optiques asservies par la commande de mouvement peuvent passer soit par les modules, soit par les supports.

### III) Combinaison des modules :

Les combinaisons des modules sont très nombreuses, car s'il existe principalement 6 modules différents pour la même taille de caméras, D2, G2, D1, G1, D1' et G1', ce qui donne beaucoup d'appariements possibles des modules deux à deux pour la stéréoscopie à deux points de vues et plus encore pour le relief à plus de deux points de vues.
- D2 : module de translation et rotation droit ; G2 : module de translation et rotation gauche : la figure 2a montre un module droit D2 et un module gauche G2 placés côte à côte
- D1' : module de rotation droit allégé (compatible avec G2), et G1', module de rotation gauche allégé (compatible avec D2, fig : 8) pour plongée, hélico... Ces modules viennent se positionner sur le module D2/G2. Le multi positionnement est mécanique et conserve la translation dans une valeur déterminée.

Tous ces modules sont les éléments constitutifs de systèmes de caméras à N points de vues (N supérieur ou égal à 2).

Pour les systèmes de prise de vues à plus de 2 points de vues, la variation progressive des vergences et entraxes peut résulter de différents mécanismes identiques actionnés par des systèmes aux effets proportionnels ou au contraire de mécanisme à échelle activés par un seul moto réducteur pour les caméras droite et un seul moto réducteur pour les caméra gauche. Ces mécanismes peuvent alors être intégrés aux supports des modules comme dans la fig. 5 où l'on voit une équerre de grande épaisseur qui contient les mécanismes de translation.

La figure 7 montre un ensemble de prise de vue dans lequel les modules sont positionnés tête-bêche dans un boîtier 80 à double support pour permettre un gain de place. Dans l'exemple représenté, on obtient des ensembles de 4 caméras comprenant deux modules D2 et deux modules G2 (ou bien deux modules D1 et deux modules G2). Chaque ensemble est logé dans un boîtier 80 et forme un ensemble de prise de vue qui peut être utilisé seul (pour une prise de vue en relief à 4 caméras) ou comme représenté en montage de type équerre (avec imbrication des axes optiques des caméras des deux ensembles) pour une prise de vue en relief à 8 caméras. On comprendra que ce montage tête-bêche concerne le cas d'ensembles regroupant un nombre pair de caméras (2, 4, 6 etc...). On notera également que ce montage implique le retournement des images d'une caméra sur deux, ce qui est facile à réaliser avec des caméras numériques.

La figure 8, montre un module G1' monté avec un module D2 sur un corps commun 11. Dans ce cas, il est à noter que les corrections d'assiettes et d'axes optiques entre les deux modules ne sont possibles que par réglage manuel. C'est donc une configuration réservée aux conditions extrêmes de prises de vues telles que plongée ou maquettes quand il s'agit de pénétrer à l'intérieur des différents décors. Les corrections manuelles sont réservées aux optiques fixes ne comprenant que mise au point et diaphragme.

### IV) Intégration des modules dans la conception même des caméras dédiées au relief à 2 ou N points de vues.

Les caméras peuvent intégrer les modules et leurs supports 7, 51, 52 dès leur conception. Ce système permet de réduire encore l'encombrement global en disposant les capteurs constitutifs des caméras au plus près des modules et en dimensionnant l'ensemble des parties mécaniques de la partie rotation de sorte qu'aucun élément n'excède l'encombrement nécessaire au montage du capteur à l'exception, dans le cas des modules de type D2 et G2 qui intègrent l'entraxe, de la largeur nécessaire au réglage de l'entraxe.

Pour les modules de type D1 et G1 ou D1' et G1', le montage du capteur donne les limites des encombrements maximaux des modules.

Ce dispositif permet de fabriquer des caméras miniatures destinées au relief.

Les avantages sont :
un gain de place en altitude : suppression possible de la queue d'aronde.
   - conception orthogonale et parallèle de la face avant caméra et capteur par rapport au module dans toutes les directions.
   - Conservation rigoureuse de l'altitude des axes optiques
   - Facilité de centrage optique sans introduction de défauts de parallélisme
   - Grande réduction de hauteur des empilements support/module/caméra
   - Correction dès la fabrication des variations d'assiettes et d'axes optiques.
   - Les caméras, modules et supports deviennent dans cette configuration un seul ensemble intégré.

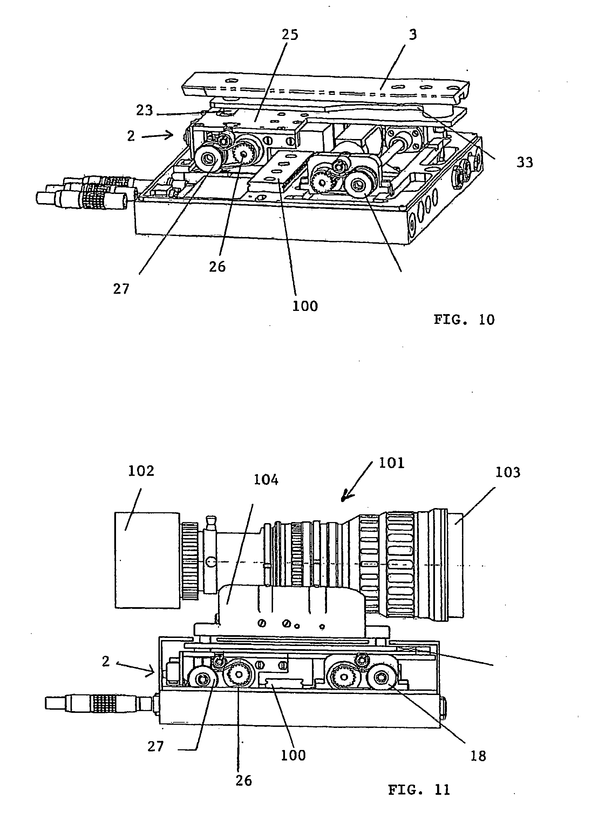

La figure 10 montre un module équipé d'un rail unique 100. Dans une configuration préférée, le dispositif d'entraînement en translation du chariot mobile 2 est logé entre le rail unique 100 et l'axe de rotation 33 du support 3 de caméra. Le rail et le dispositif d'entraînement en translation étant contenus entre l'axe de rotation et son actionneur.

La figure 11 montre un mode de montage préféré d'un dispositif de prise de vue 101 présentant d'une part, un boîtier 102 de prise de vue incluant un capteur et d'autre part, une optique 103. L'optique 103 est solidaire de l'élément rotatif 3 par exemple par l'intermédiaire du boîtier qui contient les motorisations optiques 104.

## Revendications

1. Module support de caméra pour prise de vues en relief, comportant :
- un chariot mobile en translation (2) dans un plan de translation et présentant un moyen de guidage pour coopérer avec au moins un rail de guidage porté par une première face d'un corps de module, ainsi qu'un dispositif d'entraînement en translation (15, 18, 19) dudit chariot mobile, et
- un élément rotatif (3) de support de caméra porté par le chariot mobile (2) et présentant un axe de rotation (33) et un élément de guidage (32), ainsi qu'un actionneur (27) coopérant avec l'élément de guidage (32) pour produire son déplacement de manière à entraîner en rotation l'élément de support de caméra ;
**caractérisé en ce que** le dispositif d'entraînement en translation du chariot mobile est disposé entre l'actionneur (27) et l'axe de rotation (33) de l'élément rotatif (3) ; et **en ce qu'**il comporte également :
- un dispositif de correction d'assiette (43, 48, 49) qui est intégré dans le corps du module et qui comporte des organes de commande logés dans des rainures (48) ménagées dans une deuxième face du corps de module opposée à ladite première face, ainsi que des éléments mobiles (43) perpendiculairement au plan de translation du module.

2. Module selon la revendication 1, **caractérisé en ce que** l'élément de guidage (32) coulisse dans une fente de guidage (23) ménagée dans le chariot mobile (2).

3. Module selon une des revendications 1 ou 2, **caractérisé en ce que** le chariot mobile en translation est guidé par deux rails de guidage (12, 14) parallèles et **en ce que** l'élément rotatif (3) de support de caméra s'étend au moins dans l'espace entre les deux rails de guidage (12, 14).

4. Module selon la revendication 3, **caractérisé en ce que** l'axe de rotation de l'élément rotatif de support de caméra est disposé au dessus d'un premier rail.

5. Module selon une des revendications 3 ou 4, **caractérisé en ce que** l'actionneur (27) est situé à l'extérieur de l'espace entre les deux rails (12, 14) et **en ce que** l'élément de guidage (32) est disposé dans une région de l'élément rotatif (3) de support de caméra, au-delà de l'espace entre les deux rails (12, 14).

6. Module selon une des revendications 3 à 5, **caractérisé en ce que** le dispositif d'entraînement en translation (15, 18, 19) du chariot mobile est disposé dans l'espace entre les deux rails (12, 14).

7. Module selon l'une des revendications 1 ou 2, **caractérisé en ce que** le chariot mobile en translation (2) est guidé par un rail de guidage (100) unique et **en ce que** le dispositif d'entraînement en translation du chariot mobile (2) est disposé entre ledit rail de guidage (100) et l'axe de rotation (33) ou l'actionneur (27) de l'élément rotatif (3).

8. Module selon une des revendications précédentes, **caractérisé en ce que** l'axe de rotation comporte un élément élastique (90.91) permettant dans une direction un dit déplacement d'entraînement en rotation et ayant une raideur élevée dans les autres directions.

9. Module selon une des revendications précédentes, **caractérisé en ce que** l'angle de rotation maximal de l'élément rotatif est au plus égal à 10° et plus particulièrement à 5°.

10. Module selon une des revendications précédentes, **caractérisé en ce que** ledit dispositif de correction d'assiette (43, 48, 49) est à trois points, et comporte trois dits organes de commande, ainsi que trois dits éléments mobiles perpendiculairement au plan de translation du module.

11. Module selon une des revendications précédentes, **caractérisé en ce qu'**il comporte un dispositif de prise de vue présentant un boîtier (102) de prise de vue et une optique (103) et dont l'optique (103) est, seule, solidaire du support de caméra (3) grâce au boîtier contenant les motorisations des optiques.

12. Dispositif de prise de vue en relief, **caractérisé en ce qu'**il comporte au moins deux modules selon une des revendications précédentes et un dispositif de commande apte à générer des paramètres de pilotage du chariot mobile et de l'élément rotatif de support de caméra desdits modules, ainsi qu'au moins de la mise au point des caméras portés par les modules.

13. Dispositif selon la revendication 12, **caractérisé en ce qu'**il comporte au moins un module présentant seulement un dit élément rotatif de support de caméra.

14. Dispositif selon une des revendications 12 ou 13, **caractérisé en ce que** le dispositif de commande présente :
- un premier mode opératoire dit de niveau 1 dans lequel lesdits paramètres sont ajustés indépendamment les uns des autres
- un deuxième mode opératoire dit de niveau 2 dans lequel au moins un paramètre est asservi à un paramètre.

15. Dispositif selon la revendication 14, **caractérisé en ce que** les deux paramètres sont l'angle de vergence et de distance de mise au point.

16. Dispositif selon une des revendications 12 à 15, **caractérisé en ce que** le dispositif de commande présente un troisième mode opératoire dit de niveau 3 dans lequel un premier paramètre est asservi à un deuxième paramètre, lequel est asservi à au moins un troisième paramètre.

17. Dispositif selon la revendication 16, **caractérisé en ce que** le premier paramètre est l'entraxe entre deux caméras de deux modules, le deuxième paramètre et l'angle de vergence entre lesdites deux caméras, et le troisième paramètre est la distance de mise au point.

18. Dispositif selon une des revendications 12 à 17 **caractérisé en ce que** les modules sont montés sur une équerre, au moins deux modules étant disposés de part et d'autre d'un miroir de renvoi semi-réfléchissant.

19. Dispositif selon une des revendications 12 à 18, **caractérisé en ce que** les modules sont intégrés aux caméras.

20. Dispositif selon une des revendications 12 à 18, **caractérisé en ce qu'**au moins une paire de modules symétriques sont montés tête-bêche dans un même boîtier.

21. Dispositif selon la revendication 20, **caractérisé en ce qu'**il comporte deux dits boîtiers montés en équerre de part et d'autre d'un miroir semi réfléchissant, avec imbrication des axes des caméras portées par les modules montés dans les boîtiers respectifs.

## Patentansprüche

1. Kameraunterstützungsmodul zur Aufnahme von Reliefansichten, umfassend
- einen Wagen (2), welcher in einer Translationsebene translationsbeweglich ist und ein Führungsmittel aufweist, um mit wenigstens einer Führungsschiene zusammenzuwirken, welche von einer ersten Seite eines Modulkörpers gehalten wird, sowie eine Vorrichtung zum Translationsantrieb (15, 18, 19) des beweglichen Wagens aufweist, und
- ein Drehelement (3) zur Kameraunterstützung, welches von dem beweglichen Wagen (2) getragen ist und eine Rotationsachse (33) und ein Führungselement (32), sowie einen Aktuator (27), welcher mit dem Führungselement (32) zusammenwirkt, um dessen Verschiebung auf solche Weise zu bewirken, dass das Element zur Kameraunterstützung zur Rotation angetrieben wird, aufweist;
**dadurch gekennzeichnet, dass** die Vorrichtung zum Translationsantrieb des beweglichen Wagens zwischen dem Aktuator (27) und der Rotationsachse (33) des Drehelements (3) angeordnet ist; und
dass sie außerdem umfasst :
eine Vorrichtung zur Lagekorrektur (43, 48, 49), welche in dem Körper des Moduls integriert ist und welche Steuerglieder umfasst, welche in Rillen (48) untergebracht sind, die in einer zweiten Seite des Modulkörpers gegenüber der ersten Seite herbeigeführt sind, sowie Elemente (43), welche senkrecht zu der Translationsebene des Moduls beweglich sind.

2. Modul nach Anspruch 1, **dadurch gekennzeichnet, dass** das Führungselement (32) in einem Führungsschlitz (23) gleitet, welcher in dem beweglichen Wagen (2) ausgespart ist.

3. Modul nach einem der Ansprüche 1 oder 2, **dadurch gekennzeichnet, dass** der translationsbewegliche Wagen durch zwei parallele Führungsschienen (12, 14) geführt ist, und dass das Drehelement (3) zur Kameraunterstützung sich wenigstens in dem Raum zwischen den zwei Führungsschienen (12, 14) erstreckt.

4. Modul nach Anspruch 3, **dadurch gekennzeichnet, dass** die Rotationsachse des Drehelements zur Kameraunterstützung über einer ersten Schiene angeordnet ist.

5. Modul nach einem der Ansprüche 3 oder 4, **dadurch gekennzeichnet, dass** der Aktuator (27) sich außerhalb des Raums zwischen den zwei Schienen (12, 14) befindet, und dass das Führungselement (32) sich in einem Bereich des Drehelements (3) zur Kameraunterstützung jenseits des Raums zwischen den zwei Schienen (12, 14) befindet.

6. Modul nach einem der Ansprüche 3-5, **dadurch gekennzeichnet, dass** die Vorrichtung zum Translationsantrieb (15, 18, 19) des beweglichen Wagens in dem Raum zwischen den zwei Schienen (12, 14) angeordnet ist.

7. Modul nach einem der Ansprüche 1 oder 2, **dadurch gekennzeichnet, dass** der translationsbewegliche Wagen (2) durch eine einzige Führungsschiene (100) geführt ist, und dass die Vorrichtung zum Translationsantrieb des beweglichen Wagens (2) zwischen der Führungsschiene (100) und der Rotationsachse (33) des Aktuators (27) des Drehelements (3) angeordnet ist.

8. Modul nach einem der vorhergehenden Ansprüche, **dadurch gekennzeichnet, dass** die Rotationsachse ein elastisches Element (90, 91) umfasst, welches in einer Richtung eine genannte Drehantriebsbewegung ermöglicht und in den anderen Richtungen eine erhöhte Steifheit aufweist.

9. Modul nach einem der vorhergehenden Ansprüche, **dadurch gekennzeichnet, dass** der maximale Drehwinkel des Drehelements höchstens gleich 10° und insbesondere 5° ist.

10. Modul nach einem der vorhergehenden Ansprüche, **dadurch gekennzeichnet, dass** die Vorrichtung zur Lagekorrektur (43, 48, 49) dreipunktig ist und drei genannte Steuerglieder, sowie drei genannte Elemente, welche senkrecht zu der Translationsebene des Moduls beweglich sind, umfasst.

11. Modul nach einem der vorhergehenden Ansprüche, **dadurch gekennzeichnet, dass** sie eine Vorrichtung zur Aufnahme einer Ansicht umfasst, welche ein Gehäuse (102) zur Ansichtsaufnahme und eine Optik (103) aufweist, und bei welcher nur die Optik (103) durch das Gehäuse, welches die optischen Motorisierungen enthält, an der Kameraunterstützung (3) befestigt ist.

12. Vorrichtung zur Reliefaufnahme, **dadurch gekennzeichnet, dass** sie wenigstens zwei Module nach einem der vorhergehenden Ansprüche und eine Steuervorrichtung umfasst, welche dazu ausgestaltet ist, Parameter zur Steuerung des beweglichen Wagens und des Drehelements zur Kameraunterstützung der Module sowie zur Fokussierung der von den Modulen getragenen Kameras zu erzeugen.

13. Vorrichtung nach Anspruch 12, **dadurch gekennzeichnet, dass** sie wenigstens ein Modul umfasst, welches lediglich ein genanntes Drehelement zur Kameraunterstützung aufweist.

14. Vorrichtung nach einem der Ansprüche 12 oder 13, **dadurch gekennzeichnet, dass** die Steuervorrichtung aufweist:
- einen ersten Betriebsmodus, bezeichnet als einer Ebene 1, in welchem die Parameter unabhängig voneinander angepasst werden,
- einen zweiten Betriebsmodus, bezeichnet als einer Ebene 2, in welchem wenigstens ein Parameter einem Parameter nachgeführt wird.

15. Vorrichtung nach Anspruch 14, **dadurch gekennzeichnet, dass** die zwei Parameter der Vergenzwinkel und Fokusabstand sind.

16. Vorrichtung nach einem der Ansprüche 12-15, **dadurch gekennzeichnet, dass** die Steuervorrichtung einen dritten Betriebsmodus, bezeichnet als einer Ebene 3, aufweist, in welchem ein erster Parameter einem zweiten Parameter nachgeführt wird, welcher wenigstens einem dritten Parameter untergeordnet ist.

17. Vorrichtung nach Anspruch 16, **dadurch gekennzeichnet, dass** der erste Parameter der Reihenabstand zwischen zwei Kameras von zwei Modulen ist, der zweite Parameter der Vergenzwinkel zwischen den zwei Kameras ist, und der dritte Parameter der Fokusabstand ist.

18. Vorrichtung nach einem der Ansprüche 12-17, **dadurch gekennzeichnet, dass** die Module auf einem Winkelträger angebracht sind, wobei wenigstens zwei Module auf beiden Seiten eines semireflektierenden Umlenkspiegels angeordnet sind.

19. Vorrichtung nach einem der Ansprüche 12-18, **dadurch gekennzeichnet, dass** Module an den Kameras integriert sind.

20. Vorrichtung nach einem der Ansprüche 12-18, **dadurch gekennzeichnet, dass** wenigstens ein Paar von symmetrischen Modulen entgegengesetzt in einem selben Gehäuse angebracht sind.

21. Vorrichtung nach Anspruch 20, **dadurch gekennzeichnet, dass** sie zwei genannte Gehäuse umfasst, welche abgewinkelt auf beiden Seiten eines semireflektierenden Spiegels angebracht sind, mit Verschränkung von Achsen der Kameras, welche von den in den jeweiligen Gehäusen angebrachten Modulen getragen werden.

## Claims

1. A camera-holding module for relief shooting, **characterized in that** it comprises:
- a carriage that is mobile in translation (2) in a translation plane and that has a guiding means for cooperating with at least one guiding rail supported by a first face of a module body, as well as a device (15, 18, 19) for driving said mobile carriage in translation,
- a camera-holding rotary element (3) supported by the mobile carriage (2) and having a rotation axis (33) and a guiding element (32), as well as an actuator (27) cooperating with the guiding element (32) to induce its movement so as to rotate the camera-holding element, **characterized in that** the device for driving the mobile carriage in translation is positioned between the actuator (27) and the rotation axis (33) of the rotary element (3), and **in that** it has further a seat correction device (43,48,49) which is incorporated in the module body, and which comprises control members housed in grooves (148) formed in a second face of the module body opposite to said first face, as well as elements (43) that are mobile perpendicularly to the translation plane of the module.

2. The module as claimed in claim 1, **characterized in that** the guiding element (32) slides in a guiding slot (23) formed in the mobile carriage (2).

3. The module as claimed in claims 1 or 2, **characterized in that** the carriage that is mobile in translation is guided by two parallel guiding rails (12, 14) and **in that** the camera-holding rotary element extends at least into the space between the two guiding rails (12, 14).

4. The module as claimed in claim 3, **characterized in that** the rotation axis of the camera-holding rotary element is positioned above a first rail.

5. The module as claimed in one of claims 3 or 4, **characterized in that** the actuator (127) is situated outside the space between the two rails (12, 14) and **in that** the guiding element (132) is positioned in a region of the camera-holding rotary element (3), beyond the space between the two rails (12, 14).

6. The module as claimed in one of claims 3 to 5, **characterized in that** the device for driving the mobile carriage in translation (15, 18, 19) is positioned in the space between the two rails (12, 14).

7. The module as claimed in one of claims 1 or 2, **characterized in that** the carriage that is mobile in translation (2) is guided by a single guiding rail (100) and **in that** the device (4) for driving the mobile carriage (2) in translation is positioned between said guiding rail (100) and the rotation axis (33) or the actuator (27) of the rotary element (3).

8. The module as claimed in one of the preceding claims, **characterized in that** the rotation axis comprises an elastic element (90, 91) allowing a said rotational driving movement in one direction and having a greater stiffness in the other directions.

9. The module as claimed in one of the preceding claims, **characterized in that** the maximum rotation angle of the rotary element is at most equal to 10° and more particularly to 5°.

10. The module as claimed in one of the preceding claims, **characterized in that** the said seat correction device (43, 48, 49) is a three-point seat correction device, and comprises three control members, as well as three elements that are mobile perpendicularly to the translation plane of the module.

11. The module as claimed in one of the preceding claims, **characterized in that** it comprises a shooting device having a shooting casing (102) and an optic (103) and the optic (103) of which is, on its own, attached to the camera support (3), by virtue of the casing containing the optic motorization means.

12. A relief shooting device, **characterized in that** it comprises at least one module as claimed in one of the preceding claims, and a control device able to generate parameters for controlling the mobile carriage and the camera-holding rotary element of said module or modules, as well as at least the focusing of the cameras supported by the module or modules.

13. The device as claimed in claim 12, **characterized in that** it comprises at least one module having only one said camera-holding rotary element.

14. The device as claimed in one of claims 12 to 13, **characterized in that** the control device has:
- a first so-called level 1 operating mode in which said parameters are adjusted independently of one another,
- a second so-called level 2 operating mode in which at least one parameter is slaved to a parameter.

15. The device as claimed in claim 14, **characterized in that** the two parameters are the vergence angle and the focusing distance.

16. The device as claimed in one of claims 12 to 15, **characterized in that** the control device has a third so-called level 3 operating mode in which a first parameter is slaved to a second parameter, which is slaved to at least one third parameter.

17. The device as claimed in claim 16, **characterized in that** the first parameter is the center-to-center distance between two cameras of two modules, the second parameter is the vergence angle between said two cameras, and the third parameter is the focusing distance.

18. The device as claimed in one of claims 12 to 17, **characterized in that** the modules are mounted at right angles, at least two modules being positioned either side of a semi-reflecting return mirror.

19. The device as claimed in one of claims 12 to 18, **characterized in that** the modules are incorporated in the cameras.

20. The device as claimed in one of claims 12 to 18, **characterized in that** at least one pair of symmetrical modules are mounted head-to-tail in one and the same casing.

21. The device as claimed in claim 20, **characterized in that** it comprises two said casings right-angle-mounted either side of a semi-reflecting mirror, with the axes of the cameras supported by the modules mounted in the respective casings interleaved.
